# EUROPÄISCHE PATENTANMELDUNG

(11) **EP 2 354 275 A1**
(43) Veröffentlichungstag der Anmeldung: **10.08.2011**
(21) Anmeldenummer: 09016099.5
(22) Anmeldetag: 29.12.2009
(51) Int. Cl.: C23C 28/00, F01D 5/28

(54) **Mehrfachschichtsystem aus metallischer Schicht und keramischer Schicht**

(71) Anmelder: SIEMENS AKTIENGESELLSCHAFT, 80333 München (DE)
(72) Erfinder: Casu, Alessandro, 47057 Duisburg (DE); Lüsenbrink, Oliver, Dr., 58456 Witten (DE)

(57) **Zusammenfassung**

Das Mehrlagenschichtsystem erreicht eine höhere Gesamtschichtdicke, da die kritischen Schichtdicken der einzelnen Schichten, die Mehrlagenschicht nicht überschreiten.

## Beschreibung

Die Erfindung betrifft ein Mehrfachschichtsystem aus metallischen und keramischen Schichten.

Thermisch hoch belastete Komponenten, z.B. Schaufeln in einer Gasturbine, werden mit einem Wärmedämmschichtsystem versehen. Das betrachtete Wärmedämmschichtsystem besteht aus einer metallischen Haftvermittlerschicht, auch Bondcoat (BC) genannt und der eigentlichen keramischen Wärmedämmschicht (Thermal Barrier Coating, TBC). Im Bereich der stationären Gasturbinen wird das komplette Wärmedämmschichtsystem (BC & TBC) mittels thermischen Spritzens (Plasmaspritzen) aufgebracht.

Aus heutigem Stand der Technik ist die Dicke eines Schichtsystems, bestehend aus Bondcoat und Wärmedämmschicht, limitiert, da bei Dicken oberhalb von 240µm des Bondcoats zusätzlich 500 µm - 1500 µm für die TBC Risse bereits während der Beschichtung entstehen und zumindest Teile des Schichtsystems abplatzen. Bei der Herstellung sehr dicker TBC's (>700µm) wird neben der Rissbildung auch beobachtet, dass der obere Teil der TBC sehr dicht wird. Diese geringe Porosität führt zu einer stark verringerten Dehnungstoleranz. Im Betrieb bilden sich in diesem dichteren Bereich verstärkt Risse, die zu einem vorzeitigen Versagen des Wärmedämmschichtsystems führen.

Aufgrund dieses Problems kann die Dicke einer TBC zur weiteren Erhöhung der thermischen Isolation nicht unbegrenzt erhöht werden. In Gasturbinen steht dieses Problem einer Erhöhung der Gaseinlasstemperatur und damit verbunden der Erhöhung des Gesamtwirkungsgrades entgegen.

Es ist daher Aufgabe der Erfindung, o. g. Problem zu lösen.

Das Problem wird gelöst durch ein Mehrlagenschichtsystem gemäß Anspruch 1.

In den Unteransprüchen sind weitere vorteilhafte Maßnahmen aufgelistet, die beliebig miteinander kombiniert werden können, um weitere Vorteile zu erzielen.

Es zeigen:
- Figur 1: ein Ausführungsbeispiel,
- Figur 2: eine Gasturbine,
- Figur 3: eine Turbinenschaufel,
- Figur 4: eine Brennkammer,
- Figur 5: eine Liste von Superlegierungen.

Die Figuren und die Beschreibung stellen nur Ausführungsbeispiele der Erfindung dar.

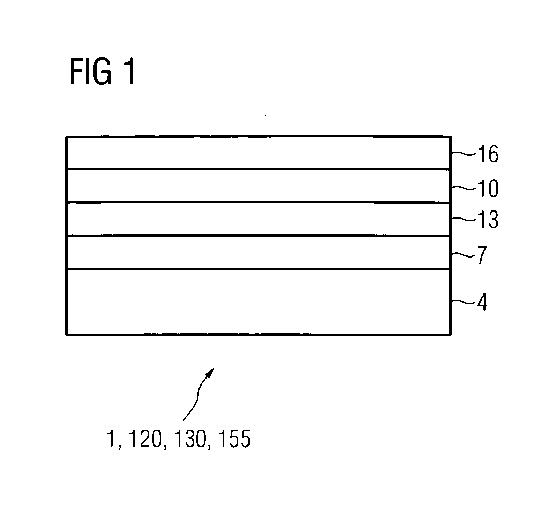

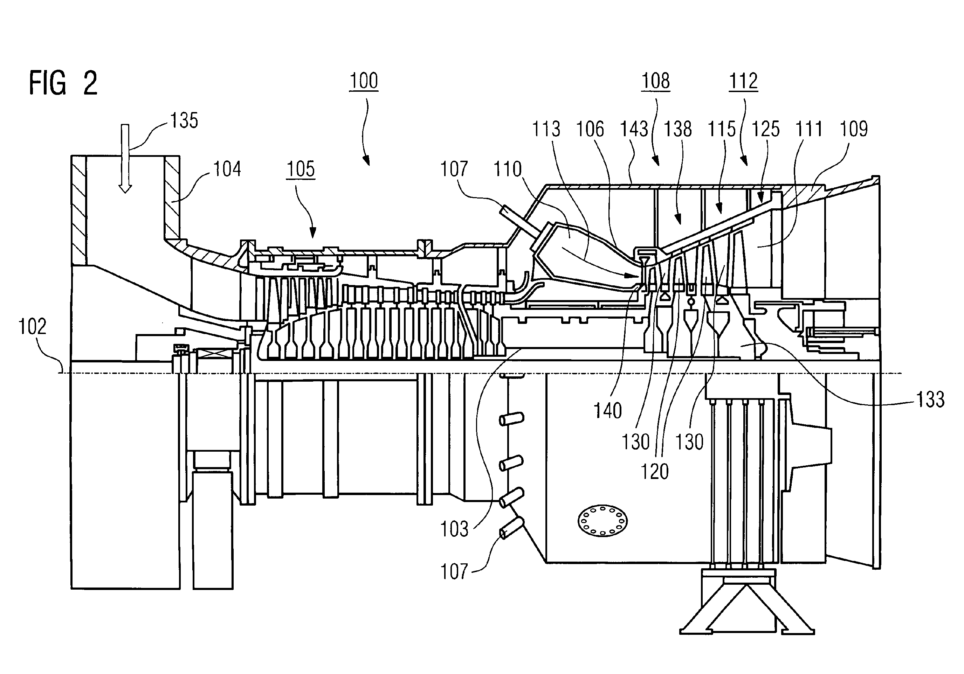

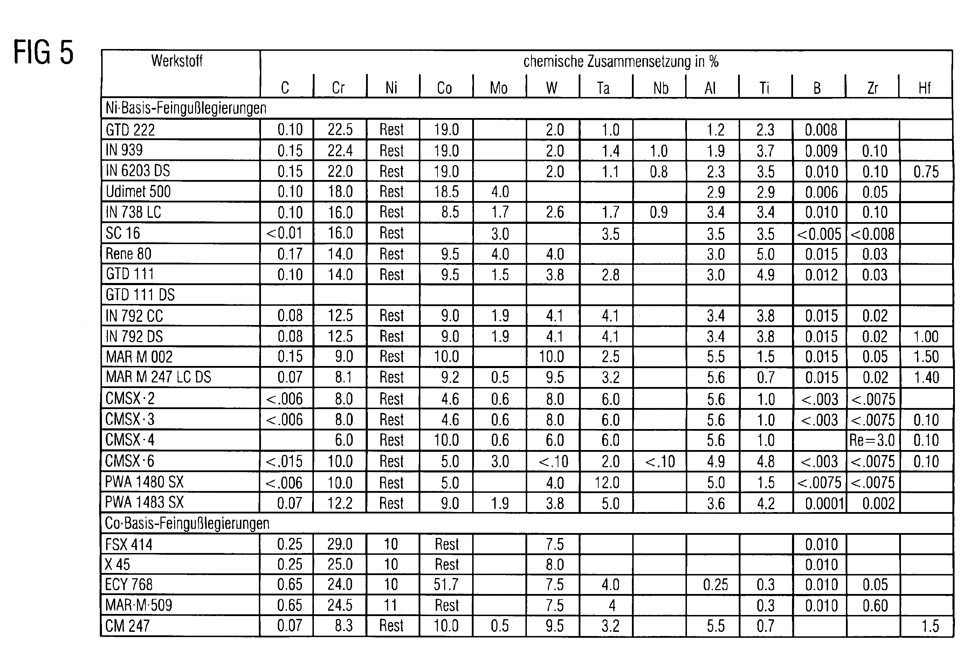

Figur 1 zeigt ein Bauteil 1, 120, 130, 155.
Das Bauteil 1, 120, 130, 155 weist ein Substrat 4 auf, das insbesondere bei Bauteilen für den Einsatz bei hohen Temperaturen wie z.B. in Gasturbinen 100 (Fig. 2) eine nickel- oder kobaltbasierte Superlegierung gemäß Figur 5 aufweist.
Das Substrat 4 ist vorzugsweise dichter als die aufgebrachten Schichten 7, 10, 13, 16.
Auf dem Substrat 4 ist eine erste, innere metallische Schicht 7 aufgebracht, die als Haftvermittlerschicht (Bondcoat = BC) zu einer ersten, inneren keramischen Schicht (TBC) 13 dient. Auf der ersten keramischen Schicht 13 ist eine zweite, äußere metallische Zwischenschicht 10 vorhanden, wobei als äußerste Schicht eine weitere keramische Schicht 16 vorhanden ist. Vorzugsweise sind die Zusammensetzungen der metallischen Schichten 7 und 10 verschieden, aber vorzugsweise auf der Basis MCrA1, insbesondere NiCoCrA1, ganz vorzugsweise mit Yttrium, wobei die Zusammensetzung so gewählt wird, dass sie entsprechend der jeweiligen Temperatur, der die metallischen Schichten 7, 10 ausgesetzt sind, angepasst sind.

Die äußere metallische Schicht 10 weist eine entsprechende Duktilität bei den höheren Temperaturen auf. Vorzugsweise weist die äußere metallische Schicht 10 eine höhere DTB-Temperatur auf. DTB ist die Temperatur des Übergangs vom duktilen zum spröden Verhalten.

Ein weiteres Maß zur Beurteilung der Duktilität ist die Strain-to-Crack-Messung. Um eine ausreichende Duktilität sicherzustellen, weist die metallische Schicht 10 bei der Strain-to-Crack-Messung vorzugsweise mindestens einen Wert von 2% auf.

Bei der metallischen Schicht 7 steht der Oxidationsschutz des Grundstoffes im Vordergrund. Daher sollte hier die MCrAlY mit Rhenium (Re) verwendet werden.

Vorteilhafte Zusammensetzung der metallischen Schicht 10: Co, 30 Ni, 28, Cr, 8 A1, 0.6 Y und 0.7 Si.

Vorteilhafte Zusammensetzung der metallischen Schicht 7: Ni, 25 Co, 17 Cr, 10 A1, 0.3 Y und 1.5 Re.

Die Schichtdicke einer metallischen Haftvermittlerschicht (Bondcoat, BC) kann 200µm bis 300µm betragen.
Die Schichtdicken der keramischen Schichten (TBC) 13, 16 liegen vorzugsweise unter einer kritischen Dicke, bei der sie als singuläre Schicht abplatzen würden.
Vorzugsweise beträgt die Schichtdicke der keramischen Schichten bis zu 600µm, insbesondere bis zu 500µm bei einer Mindestdicke von 200µm.

Die Gesamtschichtdicke von 2 x 250µm BC plus 2 x 500µm TBC kann auf 1000µm erhöht werden, wobei die kritische Dicke der einzelnen Schichten im Hinblick auf Mikrostruktur/Dichte nicht erreicht wird.

Insbesondere die insgesamt 1000µm dicke TBC trägt zu einer signifikant erhöhten thermischen Isolation bei. Bei entsprechender chemischer Zusammensetzung weist die Zwischenschicht eine hinreichende Duktilität auf, wodurch das Versagen des Gesamt-Schichtsystems verhindert wird. Die jeweilige Dicke der TBC liegt unterhalb einer kritischen Dicke von 500µm.

Die Gaseinlasstemperatur in die Gasturbine 100 kann erhöht werden, wodurch der Turbinenwirkungsgrad ebenfalls gesteigert werden kann. Durch Variation der Eigenschaften von erster 13 und zweiter 16 keramischen Schicht (z.B. Zusammensetzung, Körnung, Porosität) kann eine Optimierung des Schichtsystems hinsichtlich Herstellbarkeit, Haltbarkeit und thermischer Isolationswirkung eingestellt werden. Bei Abplatzen der äußeren TBC 16 gewährleistet das verbleibende innere System 7, 13 hinreichende Notlaufeigenschaften.

Die Figur 2 zeigt beispielhaft eine Gasturbine 100 in einem Längsteilschnitt.
Die Gasturbine 100 weist im Inneren einen um eine Rotationsachse 102 drehgelagerten Rotor 103 mit einer Welle auf, der auch als Turbinenläufer bezeichnet wird.
Entlang des Rotors 103 folgen aufeinander ein Ansauggehäuse 104, ein Verdichter 105, eine beispielsweise torusartige Brennkammer 110, insbesondere Ringbrennkammer, mit mehreren koaxial angeordneten Brennern 107, eine Turbine 108 und das Abgasgehäuse 109.
Die Ringbrennkammer 110 kommuniziert mit einem beispielsweise ringförmigen Heißgaskanal 111. Dort bilden beispielsweise vier hintereinander geschaltete Turbinenstufen 112 die Turbine 108.
Jede Turbinenstufe 112 ist beispielsweise aus zwei Schaufelringen gebildet. In Strömungsrichtung eines Arbeitsmediums 113 gesehen folgt im Heißgaskanal 111 einer Leitschaufelreihe 115 eine aus Laufschaufeln 120 gebildete Reihe 125.

Die Leitschaufeln 130 sind dabei an einem Innengehäuse 138 eines Stators 143 befestigt, wohingegen die Laufschaufeln 120 einer Reihe 125 beispielsweise mittels einer Turbinenscheibe 133 am Rotor 103 angebracht sind.
An dem Rotor 103 angekoppelt ist ein Generator oder eine Arbeitsmaschine (nicht dargestellt).

Während des Betriebes der Gasturbine 100 wird vom Verdichter 105 durch das Ansauggehäuse 104 Luft 135 angesaugt und verdichtet. Die am turbinenseitigen Ende des Verdichters 105 bereitgestellte verdichtete Luft wird zu den Brennern 107 geführt und dort mit einem Brennmittel vermischt. Das Gemisch wird dann unter Bildung des Arbeitsmediums 113 in der Brennkammer 110 verbrannt. Von dort aus strömt das Arbeitsmedium 113 entlang des Heißgaskanals 111 vorbei an den Leitschaufeln 130 und den Laufschaufeln 120. An den Laufschaufeln 120 entspannt sich das Arbeitsmedium 113 impulsübertragend, so dass die Laufschaufeln 120 den Rotor 103 antreiben und dieser die an ihn angekoppelte Arbeitsmaschine.

Die dem heißen Arbeitsmedium 113 ausgesetzten Bauteile unterliegen während des Betriebes der Gasturbine 100 thermischen Belastungen. Die Leitschaufeln 130 und Laufschaufeln 120 der in Strömungsrichtung des Arbeitsmediums 113 gesehen ersten Turbinenstufe 112 werden neben den die Ringbrennkammer 110 auskleidenden Hitzeschildelementen am meisten thermisch belastet.
Um den dort herrschenden Temperaturen standzuhalten, können diese mittels eines Kühlmittels gekühlt werden.
Ebenso können Substrate der Bauteile eine gerichtete Struktur aufweisen, d.h. sie sind einkristallin (SX-Struktur) oder weisen nur längsgerichtete Körner auf (DS-Struktur).
Als Material für die Bauteile, insbesondere für die Turbinenschaufel 120, 130 und Bauteile der Brennkammer 110 werden beispielsweise eisen-, nickel- oder kobaltbasierte Superlegierungen verwendet.
Solche Superlegierungen sind beispielsweise aus der EP 1 204 776 B1, EP 1 306 454, EP 1 319 729 A1, WO 99/67435 oder WO 00/44949 bekannt.

Die Leitschaufel 130 weist einen dem Innengehäuse 138 der Turbine 108 zugewandten Leitschaufelfuß (hier nicht dargestellt) und einen dem Leitschaufelfuß gegenüberliegenden Leitschaufelkopf auf. Der Leitschaufelkopf ist dem Rotor 103 zugewandt und an einem Befestigungsring 140 des Stators 143 festgelegt.

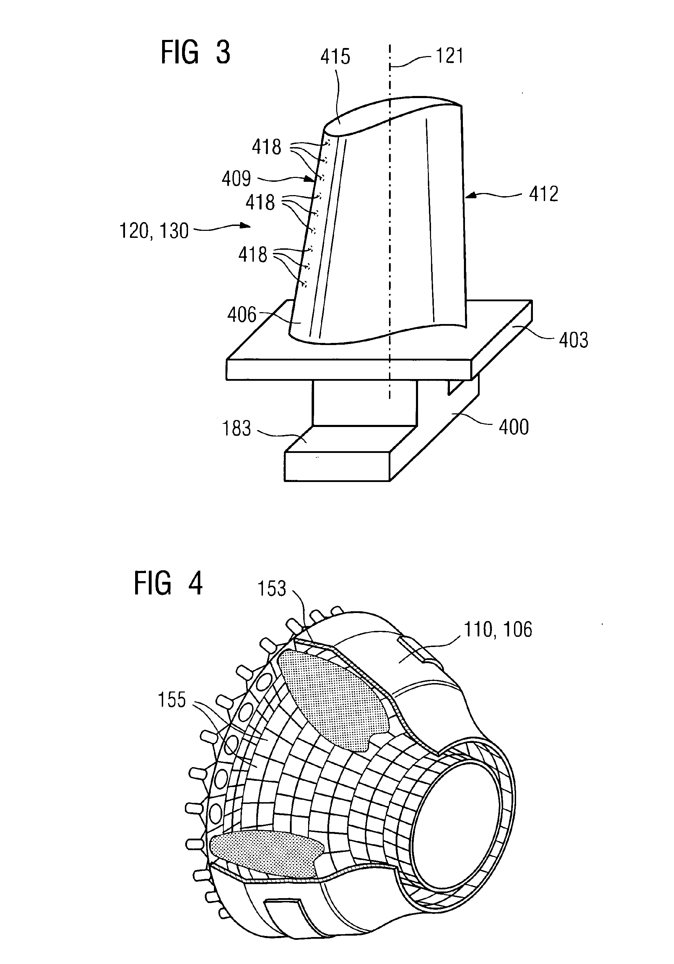

Die Figur 3 zeigt in perspektivischer Ansicht eine Laufschaufel 120 oder Leitschaufel 130 einer Strömungsmaschine, die sich entlang einer Längsachse 121 erstreckt.

Die Strömungsmaschine kann eine Gasturbine eines Flugzeugs oder eines Kraftwerks zur Elektrizitätserzeugung, eine Dampfturbine oder ein Kompressor sein.

Die Schaufel 120, 130 weist entlang der Längsachse 121 aufeinander folgend einen Befestigungsbereich 400, eine daran angrenzende Schaufelplattform 403 sowie ein Schaufelblatt 406 und eine Schaufelspitze 415 auf.
Als Leitschaufel 130 kann die Schaufel 130 an ihrer Schaufelspitze 415 eine weitere Plattform aufweisen (nicht dargestellt).

Im Befestigungsbereich 400 ist ein Schaufelfuß 183 gebildet, der zur Befestigung der Laufschaufeln 120, 130 an einer Welle oder einer Scheibe dient (nicht dargestellt).
Der Schaufelfuß 183 ist beispielsweise als Hammerkopf ausgestaltet. Andere Ausgestaltungen als Tannenbaum- oder Schwalbenschwanzfuß sind möglich.
Die Schaufel 120, 130 weist für ein Medium, das an dem Schaufelblatt 406 vorbeiströmt, eine Anströmkante 409 und eine Abströmkante 412 auf.

Bei herkömmlichen Schaufeln 120, 130 werden in allen Bereichen 400, 403, 406 der Schaufel 120, 130 beispielsweise massive metallische Werkstoffe, insbesondere Superlegierungen verwendet.

Solche Superlegierungen sind beispielsweise aus der EP 1 204 776 B1 EP 1 306 454, EP 1 319 729 A1, WO 99/67435 oder WO 00/44949 bekannt.
Die Schaufel 120, 130 kann hierbei durch ein Gussverfahren, auch mittels gerichteter Erstarrung, durch ein Schmiedeverfahren, durch ein Fräsverfahren oder Kombinationen daraus gefertigt sein.

Werkstücke mit einkristalliner Struktur oder Strukturen werden als Bauteile für Maschinen eingesetzt, die im Betrieb hohen mechanischen, thermischen und/oder chemischen Belastungen ausgesetzt sind.
Die Fertigung von derartigen einkristallinen Werkstücken erfolgt z.B. durch gerichtetes Erstarren aus der Schmelze. Es handelt sich dabei um Gießverfahren, bei denen die flüssige metallische Legierung zur einkristallinen Struktur, d.h. zum einkristallinen Werkstück, oder gerichtet erstarrt.
Dabei werden dendritische Kristalle entlang dem Wärmefluss ausgerichtet und bilden entweder eine stängelkristalline Kornstruktur (kolumnar, d.h. Körner, die über die ganze Länge des Werkstückes verlaufen und hier, dem allgemeinen Sprachgebrauch nach, als gerichtet erstarrt bezeichnet werden) oder eine einkristalline Struktur, d.h. das ganze Werkstück besteht aus einem einzigen Kristall. In diesen Verfahren muss man den Übergang zur globulitischen (polykristallinen) Erstarrung meiden, da sich durch ungerichtetes Wachstum notwendigerweise transversale und longitudinale Korngrenzen ausbilden, welche die guten Eigenschaften des gerichtet erstarrten oder einkristallinen Bauteiles zunichte machen.
Ist allgemein von gerichtet erstarrten Gefügen die Rede, so sind damit sowohl Einkristalle gemeint, die keine Korngrenzen oder höchstens Kleinwinkelkorngrenzen aufweisen, als auch Stängelkristallstrukturen, die wohl in longitudinaler Richtung verlaufende Korngrenzen, aber keine transversalen Korngrenzen aufweisen. Bei diesen zweitgenannten kristallinen Strukturen spricht man auch von gerichtet erstarrten Gefügen (directionally solidified structures).

Solche Verfahren sind aus der US-PS 6,024,792 und der EP 0 892 090 A1 bekannt.

Ebenso können die Schaufeln 120, 130 Beschichtungen gegen Korrosion oder Oxidation aufweisen, z. B. (MCrAlX; M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden, bzw. Hafnium (Hf)). Solche Legierungen sind bekannt aus der EP 0 486 489 B1, EP 0 786 017 B1, EP 0 412 397 B1 oder EP 1 306 454 A1.
Die Dichte liegt vorzugsweise bei 95% der theoretischen Dichte.
Auf der MCrAlX-Schicht (als Zwischenschicht oder als äußerste Schicht) bildet sich eine schützende Aluminiumoxidschicht (TGO = thermal grown oxide layer).

Vorzugsweise weist die Schichtzusammensetzung Co-30Ni-28Cr-8A1-0,6Y-0,7Si oder Co-28Ni-24Cr-10Al-0,6Y auf. Neben diesen kobaltbasierten Schutzbeschichtungen werden auch vorzugsweise nickelbasierte Schutzschichten verwendet wie Ni-10Cr-12Al-0,6Y-3Re oder Ni-12Co-21Cr-11A1-0,4Y-2Re oder Ni-25Co-17Cr-10Al-0,4Y-1,5Re.

Auf der MCrAlX kann noch eine Wärmedämmschicht vorhanden sein, die vorzugsweise die äußerste Schicht ist, und besteht beispielsweise aus ZrO₂ Y₂O₃-ZrO₂, d.h. sie ist nicht, teilweise oder vollständig stabilisiert durch Yttriumoxid und/oder Kalziumoxid und/oder Magnesiumoxid.
Die Wärmedämmschicht bedeckt die gesamte MCrAlX-Schicht. Durch geeignete Beschichtungsverfahren wie z.B. Elektronenstrahlverdampfen (EB-PVD) werden stängelförmige Körner in der Wärmedämmschicht erzeugt.
Andere Beschichtungsverfahren sind denkbar, z.B. atmosphärisches Plasmaspritzen (APS), LPPS, VPS oder CVD. Die Wärmedämmschicht kann poröse, mikro- oder makrorissbehaftete Körner zur besseren Thermoschockbeständigkeit aufweisen. Die Wärmedämmschicht ist also vorzugsweise poröser als die MCrAlX-Schicht.

Die Schaufel 120, 130 kann hohl oder massiv ausgeführt sein. Wenn die Schaufel 120, 130 gekühlt werden soll, ist sie hohl und weist ggf. noch Filmkühllöcher 418 (gestrichelt angedeutet) auf.

Die Figur 4 zeigt eine Brennkammer 110 der Gasturbine 100. Die Brennkammer 110 ist beispielsweise als so genannte Ringbrennkammer ausgestaltet, bei der eine Vielzahl von in Umfangsrichtung um eine Rotationsachse 102 herum angeordneten Brennern 107 in einen gemeinsamen Brennkammerraum 154 münden, die Flammen 156 erzeugen. Dazu ist die Brennkammer 110 in ihrer Gesamtheit als ringförmige Struktur ausgestaltet, die um die Rotationsachse 102 herum positioniert ist.

Zur Erzielung eines vergleichsweise hohen Wirkungsgrades ist die Brennkammer 110 für eine vergleichsweise hohe Temperatur des Arbeitsmediums M von etwa 1000°C bis 1600°C ausgelegt. Um auch bei diesen, für die Materialien ungünstigen Betriebsparametern eine vergleichsweise lange Betriebsdauer zu ermöglichen, ist die Brennkammerwand 153 auf ihrer dem Arbeitsmedium M zugewandten Seite mit einer aus Hitzeschildelementen 155 gebildeten Innenauskleidung versehen.

Aufgrund der hohen Temperaturen im Inneren der Brennkammer 110 kann zudem für die Hitzeschildelemente 155 bzw. für deren Halteelemente ein Kühlsystem vorgesehen sein. Die Hitzeschildelemente 155 sind dann beispielsweise hohl und weisen ggf. noch in den Brennkammerraum 154 mündende Kühllöcher (nicht dargestellt) auf.

Jedes Hitzeschildelement 155 aus einer Legierung ist arbeitsmediumsseitig mit einer besonders hitzebeständigen Schutzschicht (MCrAlX-Schicht und/oder keramische Beschichtung) ausgestattet oder ist aus hochtemperaturbeständigem Material (massive keramische Steine) gefertigt.
Diese Schutzschichten können ähnlich der Turbinenschaufeln sein, also bedeutet beispielsweise MCrAlX: M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden, bzw. Hafnium (Hf). Solche Legierungen sind bekannt aus der EP 0 486 489 B1, EP 0 786 017 B1, EP 0 412 397 B1 oder EP 1 306 454 A1.

Auf der MCrAlX kann noch eine beispielsweise keramische Wärmedämmschicht vorhanden sein und besteht beispielsweise aus ZrO₂ Y₂O₃-ZrO₂, d.h. sie ist nicht, teilweise oder vollständig stabilisiert durch Yttriumoxid und/oder Kalziumoxid und/oder Magnesiumoxid.
Durch geeignete Beschichtungsverfahren wie z.B. Elektronenstrahlverdampfen (EB-PVD) werden stängelförmige Körner in der Wärmedämmschicht erzeugt.
Andere Beschichtungsverfahren sind denkbar, z.B. atmosphärisches Plasmaspritzen (APS), LPPS, VPS oder CVD. Die Wärmedämmschicht kann poröse, mikro- oder makrorissbehaftete Körner zur besseren Thermoschockbeständigkeit aufweisen.

Wiederaufarbeitung (Refurbishment) bedeutet, dass Turbinenschaufeln 120, 130, Hitzeschildelemente 155 nach ihrem Einsatz gegebenenfalls von Schutzschichten befreit werden müssen (z.B. durch Sandstrahlen). Danach erfolgt eine Entfernung der Korrosions- und/oder Oxidationsschichten bzw. -produkte. Gegebenenfalls werden auch noch Risse in der Turbinenschaufel 120, 130 oder dem Hitzeschildelement 155 repariert. Danach erfolgt eine Wiederbeschichtung der Turbinenschaufeln 120, 130, Hitzeschildelemente 155 und ein erneuter Einsatz der Turbinenschaufeln 120, 130 oder der Hitzeschildelemente 155.

## Patentansprüche

1. Mehrlagenschichtsystem auf einem Substrat (4),
das aufweist:
ein Substrat (4),
eine erste metallische Schicht (7) auf dem Substrat (4),
eine erste keramische Schicht (13) auf der ersten metallischen Schicht (7),
eine zweite metallische Schicht (10) auf der ersten keramischen Schicht (13) und
eine äußerste keramische Schicht (16) auf der zweiten metallischen Schicht (10).

2. Mehrlagenschichtsystem nach Anspruch 1,
bei dem die Zusammensetzung der metallischen Schichten (7, 10) eine Zusammensetzung auf der Basis MCrAl aufweisen.

3. Mehrlagenschichtsystem nach Anspruch 1 oder 2,
bei dem die Zusammensetzung der keramischen Schichten (13, 16) eine Zusammensetzung auf der Basis Zirkonoxid aufweisen.

4. Mehrlagenschichtsystem nach Anspruch 1, 2 oder 3,
bei dem die Schichtdicken der metallischen Schichten (7, 10) im Bereich von 200µm bis 300µm liegen,
vorzugsweise gleich dick sind,
ganz insbesondere 250µm betragen.

5. Mehrlagenschichtsystem nach Anspruch 1, 2, 3 oder 4, bei dem die Schichtdicken der keramischen Schichten (13, 16) 400µm bis 600µm betragen,
insbesondere etwa gleich dick sind,
ganz insbesondere 500µm betragen.

6. Mehrlagenschichtsystem nach Anspruch 1, 2, 3, 4 oder 5, bei dem die äußere metallische Schicht (10) duktiler ist als die innere metallische Schicht (7),
insbesondere eine höhere DTB-Temperatur aufweist.

7. Mehrlagenschichtsystem nach Anspruch 1, 2, 3, 4, 5 oder 6,
bei dem die chemischen Zusammensetzungen der keramischen Schichten (13, 16) gleich sind.

8. Mehrlagenschichtsystem nach Anspruch 1, 2, 3, 4, 5 oder 6,
bei dem die chemische Zusammensetzung der keramischen Schichten (13, 16) verschieden sind.

9. Mehrlagenschichtsystem nach Anspruch 1, 2, 3, 4, 5, 6, 7 oder 8,
bei dem die Zusammensetzungen der metallischen Schichten (7, 10) deutlich verschieden sind.

10. Mehrlagenschichtsystem nach einem der Ansprüche 1, 2, 3, 4, 5, 6, 7, 8 oder 9,
bei dem die äußere metallische Schicht (10) kobaltbasiert ist.

11. Mehrlagenschichtsystem nach Anspruch 1, 2, 3, 4, 5, 6, 7, 8, 9 oder 10,
bei dem die innere metallische Schicht (7) nickelbasiert ist.

12. Mehrlagenschichtsystem nach Anspruch 1, 2, 3, 4, 5, 6, 7, 8, 9, 10 oder 11,
bei dem die zweite metallische Schicht (10) aufweist (in Gew.%):
Co, 30% Ni, 28%, Cr%, 8% A1, 0.6% Y und 0.7% Si,
insbesondere Rest Kobalt.

13. Mehrlagenschichtsystem nach Anspruch 1, 2, 3, 4, 5, 6, 7, 8, 9, 10, 11 oder 12,
bei dem die innere metallische Schicht (7) aufweist (in Ges.%):
Ni, 25% Co, 17% Cr, 10% A1, 0.3% Y und 1.5% Re,
insbesondere Rest Nickel.

14. Mehrlagenschichtsystem nach Anspruch 1, 2, 3, 4, 5, 6, 7, 8, 9, 10, 11, 12 oder 13,
bei dem die innere metallische Schicht (7) einen höheren Aluminiumanteil aufweist.

15. Mehrlagenschichtsystem nach einem der Ansprüche 1, 2, 3, 4, 5, 6, 7, 8, 9, 10, 11, 12, 13 oder 14,
bei dem die innere metallische Schicht (7) Rhenium (Re) aufweist und die äußere metallische Schicht (10) vorzugsweise nicht.

16. Mehrlagenschichtsystem nach Anspruch 1, 2, 3, 4, 5, 6, 7, 8, 9, 10, 11, 12, 13, 14 oder 15,
bei dem das Mehrlagenschichtsystem aus einem Substrat (4), zwei metallischen Schichten (7, 10) und zwei keramischen Schichten (13, 16) und optional Oxidschichten,
die aufgrund von Oxidation der metallischen Schichten (7, 10) und/oder des Substrats (4) entstanden sind,
besteht.

17. Mehrlagenschichtsystem nach einem oder mehreren der vorherigen Ansprüche,
bei dem zumindest die äußerste keramische Schicht (16) eine Pyrochlorstruktur aufweist.

18. Mehrlagenschichtsystem nach einem oder mehreren der vorherigen Ansprüche,
bei dem die erste keramische Schicht (13) eine Zusammensetzung auf der Basis von Zirkonoxid aufweist.

19. Mehrlagenschichtsystem nach einem oder mehreren der vorherigen Ansprüche,
bei dem die äußerste keramische Schicht (16) Zirkonoxid aufweist.
